# EUROPÄISCHE PATENTSCHRIFT

(11) **EP 0 388 604 B1**
(45) Veröffentlichungstag und Bekanntmachung des Hinweises auf die Patenterteilung: **04.08.1993**
(21) Anmeldenummer: 90101952.1
(22) Anmeldetag: 01.02.1990
(51) Int. Cl.: A21B 1/22

(54) **Elektrisch beheizter Backofen**
Electric baking oven
Four de boulangerie à chauffage électrique

(30) Priorität: 20.03.1989 DE 3909129
(43) Veröffentlichungstag der Anmeldung: 26.09.1990
(73) Patentinhaber: Werner & Pfleiderer GmbH, 70469 Stuttgart (DE)
(72) Erfinder: Schröder, Helmut, Dipl.-Ing. (FH), D-7120 Bietigheim-Bissingen (DE)
(74) Vertreter: Rau, Manfred, Dr. Dipl.-Ing.

(56) Entgegenhaltungen:
- DE-A- 2 518 086
- DE-B- 2 263 416

## Beschreibung

Die Erfindung betrifft einen Backofen nach dem Oberbegriff des Anspruches 1.

Bei derartigen in ihrem Grundaufbau beispielsweise aus der DE-AS 22 63 416 bekannten elektrisch beheizten Backöfen wird die Temperatur der Oberhitze einerseits und die Temperatur der Unterhitze andererseits jeweils getrennt über einen eigenen Thermostaten geregelt. Diese Regelung arbeitet verhältnismäßig genau, weil hierbei die Temperatur der jeweils Wärme abstrahlenden Wand, also der Decke und des Bodens, direkt gemessen und geregelt wird. Nachteilig hierbei ist, daß der Bäcker jeweils mit zwei Temperaturen rechnen und diese einstellen muß. Er muß also bei einer Änderung des Backgutes, die in einem normalen mittelständischen Backbetrieb mehrfach täglich auftritt, nicht nur den Oberhitze-Temperatur-Sollwert sondern, auch unabhängig hiervon den Unterhitze-Temperatur-Sollwert verstellen. Wenn die Nachstellung eines Wertes vergessen wird, dann kann dies zu erheblichen Nachteilen für die Qualität des Backvorganges führen.

Weiterhin ist es bekannt, im Backraum selber nur eine Temperatur-Meßstelle vorzusehen und über einen entsprechenden Thermostat die Oberhitze-Heizung einerseits und die Unterhitze-Heizung andererseits anzusteuern, wo die Einstellung von Heizleistungsunterschieden über der Oberhitze-Heizung einerseits und der Unterhitze-Heizung andererseits zugeordnete Leistungssteller erfolgt. Diese Regelung arbeitet sehr ungenau. Eine ähnliche Ausführung mit zwei Temperatur-Meßstellen pro Backraum ist aus DE-A-2 518 086 bekannt.

Der Erfindung liegt die Aufgabe zugrunde, einen Backofen der gattungsgemäßen Art so auszubilden, daß mit einfachen Mitteln eine besonders hohe Bedienungsfreundlichkeit und Bedienungssicherheit erreicht wird.

Diese Aufgabe wird erfindungsgemäß durch die Merkmale im Kennzeichnungsteil des Anspruches 1 gelöst. Der erfindungsgemäße Backofen hat einerseits voneinander unabhängig geregelt Oberhitze- und Unterhitze-Heizungen, wobei trotzdem zur Verstellung der Temperatur für unterschiedliches Backgut nur ein Bedienungsknopf, nämlich ein Oberhitze-Temperatur-Sollwertgeber verstellt werden muß. Dieser führt auch den Unterhitze-Temperatur-Sollwert entsprechend einer vorgegebenen Standard-Abweichung nach. Lediglich wenn in Sonderfällen einmal die Standard-Differenz zwischen Oberhitze- und Unterhitze-Temperatur-Sollwert verändert werden muß, was nur bei ganz besonderen Backvorgängen notwendig ist, dann muß ein zweiter Bedienungsknopf verstellt werden, nämlich der Oberhitze-Unterhitze-Differenz-Sollwertgeber. Das Bedienungsfeld wird hierdurch besonders übersichtlich, weil üblicherweise die erfindungsgemäßen Backöfen als Etagen-Backöfen ausgebildet sind, in denen also mehrere unabhängig voneinander beheizte und geregelte Backräume, d.h. Herde, angeordnet sind.

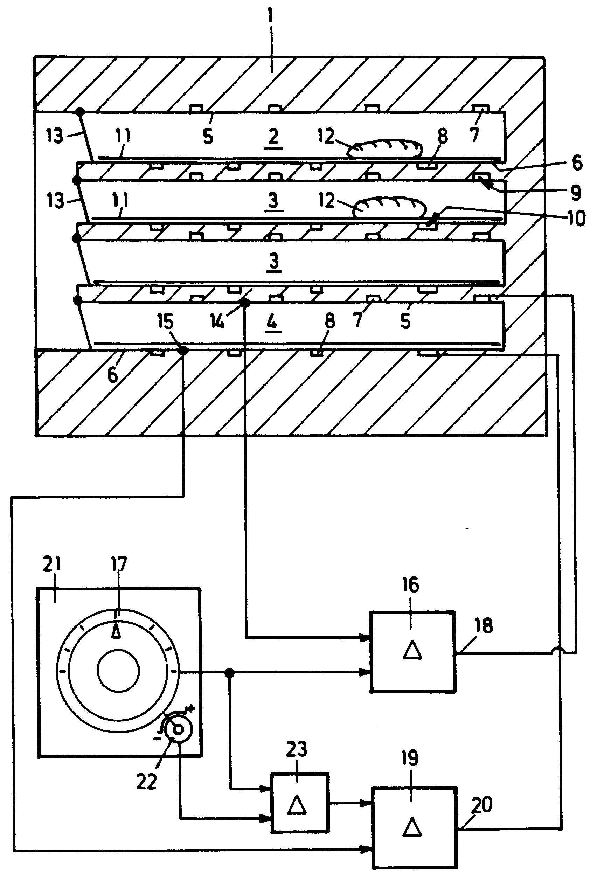

Weitere Einzelheiten, Merkmale und Vorteile der Erfindung ergeben sich aus der nachfolgenden Beschreibung eines Ausführungsbeispieles anhand der Zeichnung, die einen Backofen im Längsschnitt mit einer schematischen Darstellung der Temperatur-Regelung zeigt.

Der in der Zeichnung angedeutete Backofen weist ein Ofengehäuse 1 auf, in dem mehrere auch als Herde bezeichnete Backräume 2,3,4 etagenartig übereinander angeordnet sind, wovon die beiden mittleren Backräume 3 auch konstruktiv identisch sind. In jeder Decke 5 und jedem Boden 6 eines Backraumes 2 bzw. 3 bzw. 4 ist eine elektrische Heizung untergebracht, die durch Heizstäbe 7 bzw. 8 gebildet ist. Sämtliche in einer Decke 5 eines Backraumes 2 bzw. 3 bzw. 4 untergebrachten Heizstäbe 7 bilden eine Oberhitze-Heizung 9, alle im Boden 6 eines Backraumes 2 bzw. 3 bzw. 4 untergebrachten Heizstäbe 8 bilden eine Unterhitze-Heizung 10. Über dem Boden 6 jedes Backraumes 2,3,4 befindet sich eine Backplatte 11 zur Aufnahme des zu backenden Backgutes 12, also zur Aufnahme der Teigstücke. Die Backräume 2,3,4 sind an ihrer Vorderseite durch Türen 13 verschließbar.

An der Decke 5 jedes Backraumes 2,3,4 befindet sich eine Oberhitze-Temperatur-Meßstelle 14; am Boden 6 befindet sich jeweils eine Unterhitze-Temperatur-Meßstelle 15.

Der Meßwert der Oberhitze-Ist-Temperatur wird von der Meßstelle 14 als Eingang auf ein Oberhitze-Steuergerät 16 gegeben. Im Bedienungsfeld des Backofens befindet sich ein Oberhitze-Temperatur-Sollwertgeber 17, beispielsweise in Form eines Drehschalters. Der an diesem Sollwertgeber 17 eingestellte Temperatur-Sollwert wird ebenfalls als Eingang auf das Oberhitze-Steuergerät 16 gegeben. Der an der Meßstelle 14 gemessene Temperatur-Istwert und der vom Sollwertgeber 17 vorgegebene Temperatur-Sollwert werden in dem Steuergerät 16 miteinander verglichen. Entsprechend dem Ergebnis dieses Vergleichs wird die Oberhitze-Heizung 9 über einen Ausgang 18 ein- bzw. ausgeschaltet. Es findet also eine geschlossene Regelung statt.

Der von der Unterhitze-Temperatur-Meßstelle 15 gemessene Unterhitze-Temperatur-Istwert wird als Eingang auf ein Unterhitze-Steuergerät 19 gegeben, das einen Ausgang 20 zum Ein- bzw. Ausschalten der Unterhitze-Heizung 10 aufweist. Im Bedienungsfeld 21 des Backofens befindet sich außer dem Oberhitze-Temperatur-Sollwertgeber 17 ein Oberhitze-Unterhitze-Differenz-Sollwertgeber 22, ebenfalls in Form eines Drehschalters. An diesem Sollwertgeber 22 kann eine Abweichung von einer vorgegebenen Standardabweichung zwischen Oberhitze-Temperatur und Unterhitze-Temperatur eingestellt werden. Eine solche Standardabweichung beträgt üblicherweise 30°C. Abweichungen hiervon können also mittels dieses Sollwertgebers 22 eingestellt werden. Der Ausgang dieses Sollwertgebers 22 wird als Eingang auf einen Differenzbildner 23 gegeben, auf den ebenfalls der Ausgang des Oberhitze-Temperatur-Sollwertgebers 17 als Eingang geschaltet ist. Zwischen diesen beiden Eingängen wird im Differenzbildner 23 eine Differenz gebildet und diese als Unterhitze-Temperatur-Sollwert als Eingang auf das Unterhitze-Steuergerät 19 gegeben. Hier werden der Unterhitze-Temperatur-Sollwert und der entsprechende Istwert miteinander verglichen und führen dann zu einem Ein- bzw. Ausschalten der Unterhitze-Heizung 10. Auch hier liegt also eine geschlossene Regelung vor.

Wenn durch Verstellen des Oberhitze-Temperatur-Sollwertgebers 17 die Oberhitze verändert wird, dann wird gleichzeitig auch die Temperatur der Unterhitze verändert, wobei die Temperaturdifferenz zwischen Oberhitze und Unterhitze gleich bleibt, wenn der Sollwertgeber 22 nicht verstellt wird. Für die meisten Backwaren gilt, daß eine solche Standardabweichung von beispielsweise 30° einzuhalten ist, d.h. unter Normalbedingungen braucht der Sollwertgeber 22 nicht betätigt zu werden. Lediglich bei besonderen Backbedingungen, beispielsweise bei besonders nassem Backgut, muß der Bäcker von Hand diese Differenz zwischen Oberhitze- und Unterhitze-Temperatur verändern. Normalerweise kann er aber mittels eines einzigen Betätigungsknopfes, nämlich des Oberhitze-Temperatur-Sollwertgebers 17 die Solltemperatur von Oberhitze und Unterhitze verändern.

Anstelle des Ein- bzw. Ausschaltens der Oberhitze-Heizung 9 bzw. der Unterhitze-Heizung 10 können auch über sogenannte Leistungssteller die Leistungen der Heizungen 9 bzw. 10 verändert werden. Weiterhin ist es möglich, einzelne Heizstäbe 7 bzw. 8 zu- oder abzuschalten.

Weiterhin ist es selbstverständlich, daß der Differenzbildner 23 räumlich Teil des Unterhitze-Steuergeräts 19 sein kann und in der Regel ist.

## Patentansprüche

1. Elektrisch beheizter Backofen mit mindestens einem Backraum (2,3,4), dessen Decke (5) mit einer elektrischen Oberhitze-Heizung (9) und dessen Boden (6) mit einer hiervon gesonderten elektrischen Unterhitze-Heizung (10) versehen ist, wobei der Decke (5) eine Oberhitze-Temperatur-Meßstelle (14) und dem Boden (6) eine Unterhitze-Temperatur-Meßstelle (15) zugeordnet ist, die jeweils einen Oberhitze-Temperatur-Istwert als Eingang auf ein Oberhitze-Steuergerät (16) bzw. einen Unterhitze-Temperatur-Istwert als Eingang auf ein Unterhitze-Steuergerät (19) geben, und wobei ein Oberhitze-Temperatur-Sollwertgeber (17) einen Oberhitze-Temperatur-Sollwert auf einen Eingang des Oberhitze-Steuergerätes (16) gibt, und wobei ein Unterhitze-Temperatur-Sollwert auf einen Eingang des Unterhitze-Steuergerätes (19) gegeben wird, und wobei die Steuergeräte (16,19) Ausgänge zur Veränderung der Leistung der Heizungen (9,10) aufweisen, dadurch gekennzeichnet, daß der Oberhitze-Temperatur-Sollwert auch dem Unterhitze-Steuergerät (19) zugeführt wird und daß ein Oberhitze-Unterhitze-Differenz-Sollwertgeber (22) zur Veränderung nur des dem Unterhitze-Steuergerät (19) zugeführten Oberhitze-Temperatur-Sollwerts vorgesehen ist.

2. Backofen nach Anspruch 1, dadurch gekennzeichnet, daß dem Unterhitze-Steuergerät (19) ein Differenzbildner (23) zugeordnet ist, auf den der Oberhitze-Temperatur-Sollwert und der Oberhitze-Unterhitze-Differenz-Sollwert jeweils als Eingang aufgegeben werden und daß die Differenz als Unterhitze-Temperatur-Sollwert auf das Unterhitze-Steuergerät (19) gegeben wird.

3. Backofen nach Anspruch 1 oder 2, dadurch gekennzeichnet, daß der Oberhitze-Unterhitze-Differenz-Sollwertgeber (22) zur Einstellung einer Solltemperatur-Abweichung von einer vorgegebenen Standard-Abweichung ausgebildet ist.

## Claims

1. Electrically heated baking oven with at least one baking space (2, 3, 4), of which the top (5) is provided with an electric upper heat heating device (9) and the bottom (6) of which baking space (2, 3, 4) is provided with an electric bottom heat heating device (10) separated therefrom, wherein an upper heat temperature measuring point (14) is associated to the top (5) and wherein a bottom heat temperature measuring point (15) is associated to the bottom (6), which each transmit an upper heat temperature actual value as an input to an upper heat control device (16) and a bottom heat temperature actual value as an input to a bottom heat control device (19), respectively, and wherein an upper heat temperature set value transmitter (17) transits an upper heat temperature set value to an input of the upper heat control device (16), and wherein a bottom heat temperature set value is transmitted to an input of the bottom heat control device (19), and wherein the control devices (16, 19) comprise outputs for altering the power of the heatings (9, 10), characterized in that the upper heat temperature set value is also supplied to the bottom heat control device (19) and in that a set value transmitter of difference between upper heat temperature and bottom heat temperature (22) is provided for altering only the upper heat temperature set value supplied to the bottom heat control device (19).

2. Baking oven according to claim 1, characterized in that a differential device (23) is associated to the bottom heat control device (19), to which the upper heat temperature set value and the set value of difference between upper heat temperature and bottom heat temperature, respectively, is transmitted as an input and in that the difference is transmitted to the bottom heat control device (19) as a bottom heat temperature set value.

3. Baking oven according to claim 1 or 2, characterized in that the set value transmitter of difference between upper heat temperature and bottom heat temperature (22) is formed by a predetermined standard deviation for adjusting a set temperature deviation.

## Revendications

1. Four de boulangerie à chauffage électrique comprenant au moins une chambre de cuisson (2, 3, 4) dont la voûte (5) est équipée d'un chauffage électrique de voûte (9) et dont la sole (6) est équipée d'un chauffage électrique de sole (10) distinct du précédent, un point de mesure (14) de la température de voûte étant associé à la voûte (5) et un point de mesure (15) de la température de sole étant associé à la sole (6), ces points de mesure transmettant respectivement une valeur réelle de la température de voûte à l'entrée d'un appareil de commande (16) de la température de la voûte et une valeur réelle de la température de sole à l'entrée d'un appareil de commande (19) de la température de la sole, un ajusteur (17) de la température de consigne de la voûte transmettant une température de consigne de la voûte à une entrée de l'appareil de commande (16) de la température de la voûte, une valeur de consigne de la température de sole étant fournie à une entrée de l'appareil de commande (19) de la température de la sole, les appareils de commande (16, 19) comportant des sorties pour modifier la puissance des chauffages (9, 10), caractérisé en ce que la température de consigne de la voûte est également fournie à l'appareil de commande (19) de la température de la sole, et en ce qu'un ajusteur (22) de différence de consigne voûte/sole est prévu pour ne modifier que la température de consigne de voûte transmise à l'appareil de commande (19) de la température de la sole.

2. Four de boulangerie selon la revendication 1, caractérisé en ce que, à l'appareil de commande (19) de la température de la sole, est associé un soustracteur (23) aux entrées duquel sont transmises la température de consigne de la voûte et la différence de consigne voûte/sole, et en ce que la différence est transmise, à titre de valeur de consigne de la température de sole, à l'appareil de commande (19) de la température de la sole.

3. Four de boulangerie selon la revendication 1 ou 2, caractérisé en ce que l'ajusteur 22 de différence de consigne voûte/sole est conçu pour régler une déviation de température de consigne par rapport à un écart type prédéfini.
